# FASCICULE DE BREVET EUROPEEN

(11) **EP 3 680 175 B1**
(45) Date de publication et mention de la délivrance du brevet: **24.02.2021**
(21) Numéro de dépôt: 20150299.4
(22) Date de dépôt: 06.01.2020
(51) Int. Cl.: B64D 27/26

(54) **ATTACHE-MOTEUR D'AÉRONEF COMPRENANT AU MOINS UN SYSTÈME D'IMMOBILISATION EN TRANSLATION DE TYPE FOURCHETTE D'UN PION DE CISAILLEMENT, PROCÉDÉ DE MONTAGE DE LADITE ATTACHE-MOTEUR ET AÉRONEF COMPRENANT LADITE ATTACHE-MOTEUR**
ANTRIEBSAUFHÄNGUNG BEINHALTEND ZUMINDEST EIN JOCH-BEFESTIGUNGSSYSTEM FÜR EINEN SCHERSTIFT, MONTAGEVERFAHREN FÜR EINER SOLCHEN AUFHÄNGUNG UND FLUGZEUG BEINHALTEND EINE SOLCHE AUFHÄNGUNG
ENGINE MOUNTING STRUCTURE COMPRISING AT LEAST A YOKE-TYPE TRANSLATION FIXING SYSTEM FOR A SHEAR PIN, MOUNTING METHOD OF SUCH A STRUCTURE AND AIRCRAFT COMPRISING SUCH A STRUCTURE

(30) Priorité: 09.01.2019 FR 1900211
(43) Date de publication de la demande: 15.07.2020
(73) Titulaire: AIRBUS OPERATIONS (S.A.S.), 31060 Toulouse (FR)
(72) Inventeur: DEFORET, Thomas, 31060 TOULOUSE Cedex 9 (FR); PUECH, Jacky, 31060 TOULOUSE Cedex 9 (FR); CAYSSIALS, Julien, 31060 TOULOUSE Cedex 9 (FR)
(74) Mandataire: Gicquel, Olivier Yves Gérard

(56) Documents cités:
- FR-A1- 2 891 254
- US-A- 4 943 013
- US-A- 5 649 417

## Description

La présente demande se rapporte à une attache-moteur d'aéronef comprenant au moins un système d'immobilisation en translation de type fourchette d'un pion de cisaillement, à un procédé de montage de ladite attache-moteur ainsi qu'à un aéronef comprenant ladite attache-moteur.

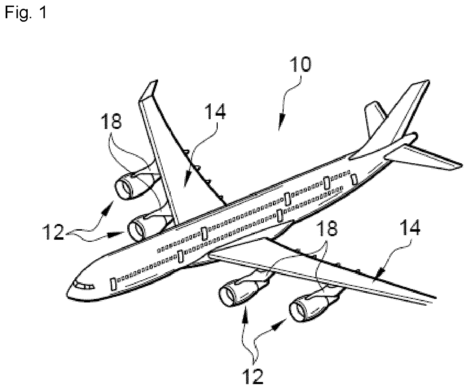

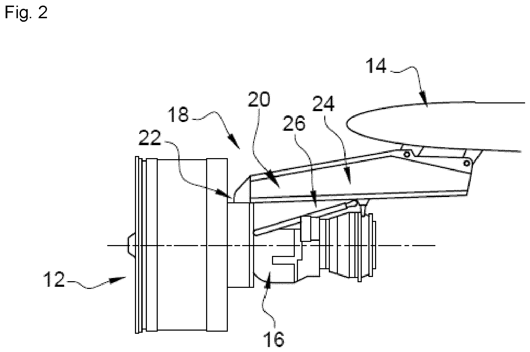

Selon une configuration visible sur les figures 1 et 2, un aéronef 10 comprend plusieurs ensembles moteurs 12 qui sont positionnés sous la voilure 14 de l'aéronef 10.

Un ensemble moteur 12 comprend un moteur 16, une nacelle (non représentée sur la figure 2) positionnée autour du moteur 16 et un mât 18 qui assure la liaison entre le moteur 16 et le reste de l'aéronef 10, notamment la voilure 14.

Le mât 18 comprend une structure primaire 20 qui est reliée au moteur 16 par une attache-moteur avant 22, une attache-moteur arrière 24 et un couple de bielles de poussée 26 qui assurent la reprise des efforts de poussée.

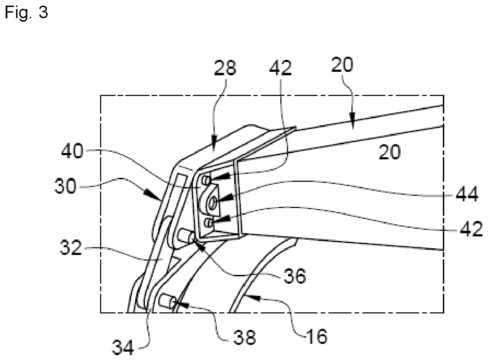

Selon un mode de réalisation visible sur la figure 3, l'attache-moteur avant 22 comprend un corps d'attache 28, relié au mât 18, qui présente deux chapes 30 disposées de part et d'autre du mât 18, ainsi que deux bielles 32 qui relient chacune l'une des chapes 30 du corps d'attache 28 à une chape 34 solidaire du moteur 16. Chaque bielle 32 est reliée à l'une des chapes 30 du corps d'attache 28 par un premier axe d'articulation 36 et à l'une des chapes 34 du moteur 16 par un deuxième axe d'articulation 38.

Selon un mode de réalisation illustré par le document FR2891245, la structure primaire 20 présente à l'avant deux pattes de fixation 40 qui s'étendent de part et d'autre de la structure primaire 20 et qui offrent une face de contact contre laquelle est plaquée une face de contact du corps d'attache 28. L'attache-moteur avant 22 comprend une liaison entre la structure primaire 20 et le corps d'attache 28 comportant, pour chaque patte de fixation 40, plusieurs boulons 42 traversant la patte de fixation 40 et le corps d'attache 28 ainsi qu'au moins un pion de cisaillement 44 qui se loge à cheval dans un premier trou ménagé dans la patte de fixation 40 et dans un deuxième trou ménagé dans le corps d'attache 28. Selon ce document, lors du montage, les pions de cisaillement sont introduits depuis chaque patte de fixation 40.

En fonctionnement, chaque pion de cisaillement 44 doit être immobilisé en translation dans les premier et deuxième trous.

Selon un mode de réalisation, chaque pion de cisaillement 44 comprend, à une première extrémité, un épaulement qui prend appui contre l'une des pattes de fixation 40. Pour empêcher la sortie du pion de cisaillement 44, une butée démontable est mise en place au niveau de la deuxième extrémité du pion de cisaillement 44. Ce mode de réalisation nécessite la présence d'un premier dégagement du côté de la patte de fixation 40, au droit du premier trou, pour permettre l'introduction du pion de cisaillement 44, et d'un deuxième dégagement du côté du corps d'attache 28, au droit du deuxième trou, pour permettre la mise en place de la butée démontable. Or, dans certains cas, par exemple pour les moteurs à haut taux de dilution de type UHBR (pour Ultra High By Pass Ratio en anglais) l'accès à l'avant du corps d'attache 28 est impossible.

La même problématique se pose pour l'attache moteur décrite dans le document FR2891254 qui décrit le préambule de la revendication 1.

La présente invention vise à remédier à tout ou partie des inconvénients de l'art antérieur.

A cet effet, l'invention a pour objet une attache-moteur d'aéronef telle que revendiquée dans la revendication 1.

Ainsi, il est possible de monter chaque pion de cisaillement et ses systèmes d'immobilisation à partir seulement de la structure primaire. Ainsi, l'espacement entre le corps d'attache et le moteur d'aéronef peut être très réduit à l'avant du corps d'attache.

D'autres caractéristiques et avantages ressortiront de la description de l'invention qui va suivre, description donnée à titre d'exemple uniquement, en regard des dessins annexés parmi lesquels :
La figure 1 est une vue en perspective d'un aéronef,
La figure 2 est une représentation schématique d'un ensemble propulsif relié à une voilure qui illustre un mode de réalisation de l'art antérieur,
La figure 3 est une vue en perspective d'une attache-moteur avant d'un aéronef qui illustre un mode de réalisation de l'art antérieur,
La figure 4 est une vue en perspective d'une attache-moteur avant d'un aéronef à l'état démonté qui illustre un mode de réalisation de l'invention,
La figure 5 est une vue de côté d'une attache-moteur avant d'un aéronef à l'état assemblé qui illustre un mode de réalisation de l'invention,
La figure 6 est une vue en perspective d'une attache-moteur avant d'un aéronef à l'état assemblé qui illustre un mode de réalisation de l'invention,
La figure 7 est une coupe selon la ligne VII-VII de la figure 6 d'une partie de l'attache-moteur avant visible sur la figure 6,
La figure 8 est une vue de face d'une plaque d'arrêt qui illustre un mode de réalisation de l'invention,
La figure 9 est une coupe selon la ligne IX-IX de la figure 8 de la plaque d'arrêt, et
La figure 10 est une coupe longitudinale d'un système anti-rotation qui illustre un mode de réalisation de l'invention.

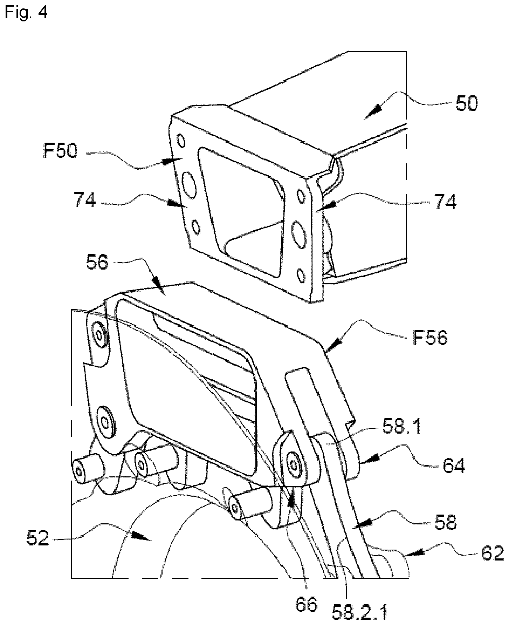

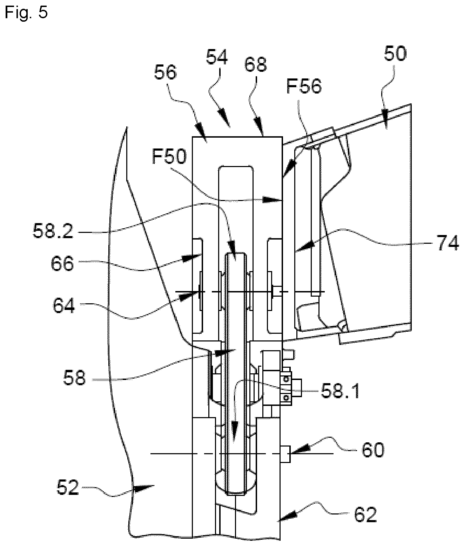

Selon un mode de réalisation illustré sur les figures 4 et 5, une structure primaire 50 d'un mât d'aéronef est reliée à un moteur d'aéronef 52 par une attache-moteur avant 54.

Pour la suite de la description, une direction longitudinale est une direction parallèle à l'axe de rotation du moteur d'aéronef 52. Un plan longitudinal vertical est un plan vertical passant par l'axe de rotation du moteur d'aéronef 52. Les termes « avant » et « arrière » font référence au sens d'écoulement du flux d'air à l'intérieur du moteur d'aéronef 52 en fonctionnement, le flux d'air s'écoulant de l'avant vers l'arrière. Les termes « horizontal » et « vertical » correspondent aux directions horizontale (perpendiculaire à la direction de la pesanteur) et verticale (parallèle à la direction de la pesanteur) lorsque l'aéronef est au sol.

Bien que décrite appliquée à une attache-moteur avant, l'invention n'est aucunement limitée à cette application et pourrait être utilisée pour les autres attaches-moteurs.

Selon une configuration, l'attache-moteur avant 54 comprend un corps d'attache 56, deux bielles 58, disposées de part et d'autre du plan longitudinal vertical, reliant chacune le corps d'attache 56 au moteur d'aéronef 52 ainsi que pour chaque bielle 58, un premier axe d'articulation 60 reliant une première extrémité 58.1 de la bielle 58 à une première chape 62 du moteur d'aéronef 52 et au moins un deuxième axe d'articulation 64 reliant une deuxième extrémité 58.2 de la bielle 58 à une première chape 66 du corps d'attache 56.

La structure primaire 50 comprend au moins une première face de contact F50 contre laquelle est plaquée au moins une deuxième face de contact F56 du corps d'attache 56. Les première et deuxième faces de contact F50 et F56 sont disposées dans des plans verticaux approximativement perpendiculaires à la direction longitudinale.

L'attache-moteur avant 54 comprend une liaison de corps d'attache 68 reliant le corps d'attache 56 et une partie de la structure primaire 50, permettant de maintenir les première et deuxième faces de contact F50 et F56 plaquées l'une contre l'autre. Cette liaison du corps d'attache 68 comprend plusieurs éléments de liaison 70, comme des boulons par exemple, et au moins un pion de cisaillement 72. La partie de la structure primaire 50 peut être une pièce rapportée sur la structure primaire 50.

Selon une configuration visible par exemple sur la figure 4, la structure primaire 50 comprend deux pattes de fixation 74 présentant des faces coplanaires qui forment la première face de contact F50 et qui s'étendent dans un plan sensiblement vertical perpendiculaire à la direction longitudinale, de part et d'autre de la structure primaire 50. Pour chaque patte de fixation 74, la liaison de corps d'attache 68 comprend deux éléments de liaison 70, 70' et un pion de cisaillement 72, les éléments de liaison 70, 70' étant disposés au-dessus et au-dessous du pion de cisaillement 72.

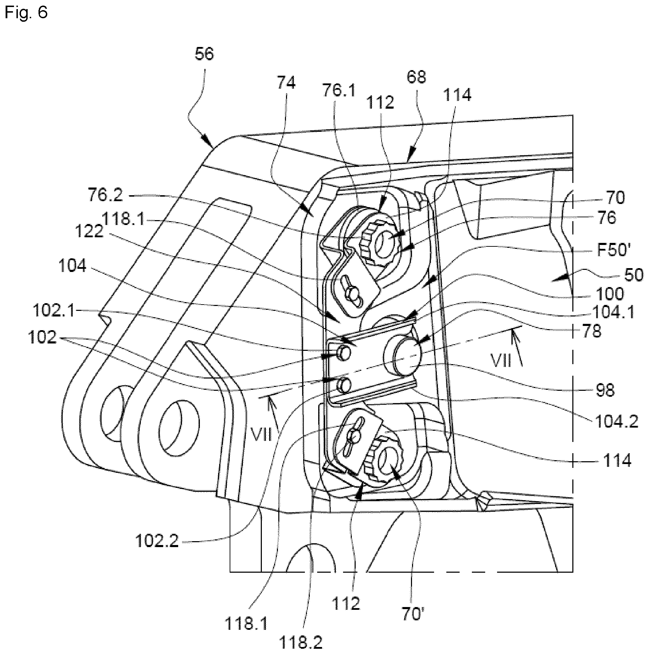

Selon un mode de réalisation visible sur la figure 6, chaque élément de liaison 70, 70' est un boulon qui comporte une tête 76 présentant une section inférieure 76.1 circulaire et une section supérieure 76.2 polygonale.

Le corps d'attache 56, les bielles 58, les premier et deuxième axes d'articulation 60, 64, les éléments de liaison 70, 70' ne sont pas plus décrits car ils peuvent être identiques à ceux de l'art antérieur.

Chaque pion de cisaillement 72 comprend un corps cylindrique 78 qui présente une première extrémité 78.1 dite libre, de préférence arrondie et une deuxième extrémité 78.2 (opposée à la première extrémité) ainsi qu'une collerette 80 positionnée au niveau de la deuxième extrémité 78.2 du corps cylindrique 78. La collerette 80 présente deux faces planes perpendiculaires à l'axe du corps cylindrique 78 et un diamètre D80 supérieur au diamètre D78 du corps cylindrique 78.

Pour chaque pion de cisaillement 62, la structure primaire 50 comprend un premier trou 82 traversant, présentant une première extrémité débouchant au niveau de la première face de contact F50 et une deuxième extrémité débouchant au niveau d'une face d'accès F50'. Le corps d'attache 56 comprend un deuxième trou 84 traversant, les premier et deuxième trous 82 et 84 étant configurés pour loger le corps cylindrique 78 du pion de cisaillement 72.

Selon une première configuration, les premier et deuxième trous 82, 84 ont un diamètre sensiblement identique (au jeu d'assemblage près) au diamètre D78 du corps cylindrique 78 du pion de cisaillement 72.

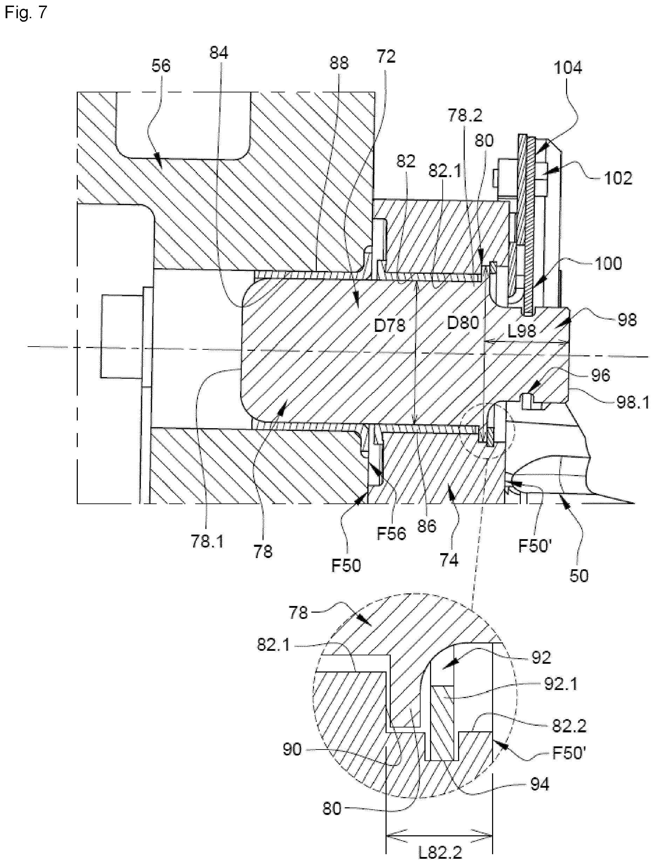

Selon un mode de réalisation visible sur la figure 7, une première bague coulissante 86 est intercalée entre le premier trou 82 et le corps cylindrique 78 et/ou une deuxième bague coulissante 88 est intercalée entre le deuxième trou 84 et le corps cylindrique 78.

La liaison de corps d'attache 68 comprend un système d'immobilisation en translation du corps cylindrique 78 du pion de cisaillement 72 à cheval dans les premier et deuxième trous 82, 84.

Par à cheval, on entend qu'un premier tronçon du pion de cisaillement 72 est positionné dans le premier trou 82 et qu'un deuxième tronçon du pion de cisaillement 72 est positionné dans le deuxième trou 84.

Le système d'immobilisation en translation comprend un épaulement 90 à proximité de la deuxième extrémité du premier trou 82 qui forme une surface d'appui contre laquelle prend appui l'une des faces de la collerette 80 en fonctionnement. Cet épaulement 90 est sensiblement perpendiculaire à l'axe du premier trou. Selon une configuration, le premier trou 82 comprend un tronçon principal 82.1 qui s'étend de la face de contact F50 jusqu'à l'épaulement 90 et un tronçon élargi 82.2 qui s'étend de l'épaulement 90 jusqu'à la face d'accès F50'. Le tronçon élargi 82.2 a un diamètre supérieur à celui du tronçon principal 82.1 et au diamètre D80 de la collerette 80 de sorte que cette dernière se loge dans le tronçon élargi 82.2 et prenne appui contre l'épaulement 90 en fonctionnement.

Le système d'immobilisation en translation comprend également une butée démontable 92, solidaire de la première structure 50, configurée pour immobiliser la collerette 80 entre l'épaulement 90 et la butée démontable 92. La butée démontable 92 est séparée de l'épaulement 90 d'une distance sensiblement égale à l'épaisseur de la collerette 80 (dimension prise parallèlement à l'axe du corps cylindrique 78 du pion de cisaillement 72). En fonctionnement, la collerette 80 est immobilisée entre l'épaulement 90 et la butée démontable 92. De ce fait, le pion de cisaillement 72 est immobilisé en translation dans les premier et deuxième trous 82, 84. L'épaulement 90 et la butée démontable 92 forment un premier système d'immobilisation en translation.

Selon un mode de réalisation, le tronçon élargi 82.2 comprend une gorge 94 qui s'étend entre deux plans perpendiculaires à l'axe du premier trou 82 et sur toute la circonférence du premier trou 82. Cette gorge 94 est séparée de l'épaulement 90 d'une distance sensiblement égale à l'épaisseur de la collerette 80. En complément, la butée démontable 92 est un circlips 92.1 qui se loge dans la gorge 94.

La liaison de corps d'attache 68 comprend un deuxième système d'immobilisation en translation du pion de cisaillement 72. Ce deuxième système d'immobilisation en translation comprend d'une part une gorge 96 positionnée dans un prolongement 98 du pion de cisaillement 72 et, d'autre part, une fourchette 100, reliée directement ou indirectement à la structure primaire par au moins une liaison démontable 102, qui coopère avec la gorge 96 de manière à immobiliser en translation le pion de cisaillement 72.

Selon un mode de réalisation, le prolongement 98 a une forme cylindrique coaxiale au corps cylindrique 78. Le prolongement 98, la collerette 80 et le corps cylindrique 78 ne forment qu'une unique et même pièce. Le prolongement 98 s'étend de la collerette 80 jusqu'à une extrémité libre 98.1. Le prolongement 98 a une longueur L98 (distance entre la collerette 80 et l'extrémité libre 98.1) supérieure à la longueur du tronçon élargi L82.2 du premier trou 82 de sorte qu'une partie du prolongement 98, au niveau de laquelle est ménagée la gorge 96, soit située en dehors du premier trou 82 lorsque la collerette 80 est en appui contre l'épaulement 90 en fonctionnement.

La gorge 96 s'étend sur toute la circonférence du prolongement 98 et présente deux flancs positionnés dans deux plans perpendiculaires à l'axe du corps cylindrique 78.

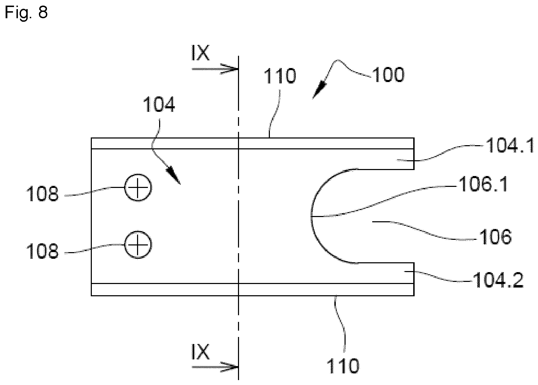

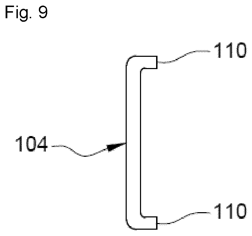

Selon un mode de réalisation visible sur les figures 8 et 9, la fourchette 100 est une plaque d'arrêt 104 qui présente deux branches 104.1 et 104.2 configurées pour se loger partiellement dans la gorge 96 du prolongement 98 de part et d'autre de ce denier. La plaque d'arrêt 104 a une épaisseur sensiblement égale à la largeur de la gorge 96 du prolongement 98. Les branches 104.1 et 104.2 sont séparées par une distance sensiblement égale au diamètre du fond de la gorge 96. Selon une configuration, les branches 104.1 et 104.2 sont séparées par une découpe en U 106 comportant une base 106.1 qui décrit un demi-cercle de diamètre sensiblement égal à celui du fond de la gorge 96. Cette plaque d'arrêt 104 comprend également un orifice traversant 108 pour chaque liaison démontable 102.

Selon un mode de réalisation, la plaque d'arrêt 104 a une forme rectangulaire et comprend, au niveau d'un premier petit côté, la découpe en U 106 qui délimite les deux branches 104.1 et 104.2 et, à proximité du deuxième petit côté, le (ou les) orifice(s) traversant(s) 108 prévu(s) pour la liaison démontable 102. Pour la rigidifier, la plaque d'arrêt 104 comprend des bords recourbés 110 au niveau des deux grands côtés.

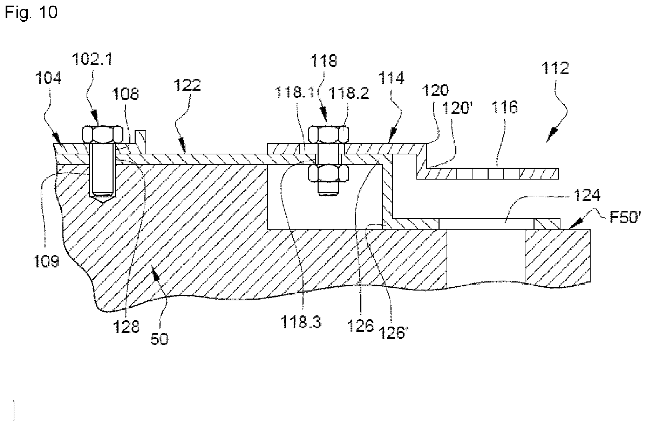

Selon un mode de réalisation visible sur la figure 6, la liaison démontable 102 comprend deux éléments de fixation 102.1, 102.2, comme des vis par exemple, qui traversent la plaque d'arrêt 104 via les orifices traversants 108 et se vissent dans des trous taraudés 109 (visibles sur la figure 10) ménagés dans la structure primaire 50.

La liaison de corps d'attache 68 comprend au moins un système anti-rotation 112 pour au moins l'un des éléments de liaison 70, 70'. Selon une configuration, la liaison de corps d'attache 68 comprend un système anti-rotation 112 pour chaque élément de liaison 70, 70'. Selon un mode de réalisation, un système anti-rotation 112 comprend une plaque anti-rotation 114 qui présente un orifice traversant 116 qui a une section complémentaire à la section supérieure 76.2 de la tête 76 de l'élément de liaison 70, 70' ainsi qu'une liaison démontable 118 pour la relier directement ou indirectement à la structure primaire 50. Par complémentaire, on entend que lorsque la section supérieure 76.2 de la tête 76 est insérée dans l'orifice traversant 116, la plaque anti-rotation 114 et la tête 76 sont immobilisées en rotation l'une par rapport à l'autre.

Selon une configuration visible sur la figure 10, la plaque anti-rotation 114 peut comprendre des lignes de pliage 120, 120' afin de s'adapter au relief de la face d'accès F50'.

La liaison démontable 118 comprend un premier trou de passage 118.1 de forme oblongue au niveau de la plaque anti-rotation 114 et un élément de fixation 118.2, comme une vis ou un boulon par exemple. La forme oblongue du trou de passage 118.1 présente le même centre que l'orifice traversant 116 et permet de loger l'élément de fixation 118.2 en tolérant un léger débattement angulaire de la plaque anti-rotation 114.

Selon une configuration, la liaison de corps d'attache 68 comprend, pour chaque patte de fixation 74, une plaque support 122, à laquelle sont reliées la plaque d'arrêt 104 et la ou les plaque(s) anti-rotation 114, qui est elle-même reliée à la structure primaire 50.

Cette plaque support 122 comprend un orifice de passage 124, pour chaque élément de liaison 70, 70', qui a une section approximativement égale à la section inférieure 76.1 de la tête 76 de l'élément de liaison 70, 70' correspondant.

Cette plaque support 122 peut comprendre des lignes de pliage 126, 126' afin de s'adapter au relief de la face d'accès F50'. Elle présente, pour chaque plaque anti-rotation 114, un deuxième trou de passage 118.3 configuré pour être traversé par l'élément de fixation 118.2 de la liaison démontable 118 de la plaque anti-rotation 114. Ce deuxième trou de passage 118.3 présente une section circulaire avec un diamètre légèrement supérieur à celui de l'élément de fixation 118.2.

La plaque support 122 présente également des trous de passage 128 pour chaque élément de fixation 102.1, 102.2 de la plaque d'arrêt 114.

Le procédé de montage de l'attache-moteur 54 est le suivant :
Dans un premier temps, le corps d'attache 56 est relié au moteur d'aéronef 52 par les bielles 58.

En suivant, le moteur d'aéronef 52 est déplacé verticalement de manière à positionner les première et deuxième faces de contact F50 et F56 l'une en face de l'autre. Les trous de passage des éléments de liaison 70, 70' sont alignés par exemple en insérant des pions de centrage dans les premiers et deuxièmes trous 82, 84 destinés aux pions de cisaillement.

Les éléments de liaison 70, 70' sont mis en place. En suivant, les pions de centrage sont retirés et les pions de cisaillement 72 sont insérés dans les premiers et deuxièmes trous 82, 84 jusqu'à ce que pour chacun d'eux la collerette 80 soit en appui contre l'épaulement 90. Pour chaque pion de cisaillement 72, le circlips 92.1 est mis en place dans la gorge 94 du tronçon élargi 82.2 du premier trou 82.

La plaque support 122 est mise en place en faisant coopérer les orifices de passage 124 avec la section inférieure 76.2 de la tête 76 de chaque élément de liaison 70, 70'. En suivant, la plaque d'arrêt 104 est mise en place en faisant coopérer les branches 104.1, 104.2 avec la gorge 96 du prolongement 98 du pion de cisaillement 72. Les éléments de fixation 102.1, 102.2 sont mis en place de manière à solidariser la plaque support 122 et la plaque d'arrêt 104 à la structure primaire 50.

Enfin, pour chaque élément de liaison 70, 70' la plaque anti-rotation 114 est emmanchée sur la section supérieure 76.2 de la tête 76 et reliée à la plaque support 122 grâce à l'élément de fixation 118.2.

Pour le démontage, les étapes précédentes sont reproduites en sens inverse. Pour retirer le pion de cisaillement 72 des premier et deuxième trous 82, 84, il est possible d'utiliser la deuxième gorge 96 pour agripper le pion de cisaillement 72.

Selon ce procédé de montage, chaque pion de cisaillement 72 et ses systèmes d'immobilisation sont mis en place à partir seulement de la face d'accès F50'. Ainsi, l'espacement entre le corps d'attache 56 et le moteur d'aéronef 52 peut être très réduit à l'avant du corps d'attache 56.

## Revendications

1. Attache-moteur d'aéronef comprenant un corps d'attache (56) relié à une structure primaire (50) d'un mât d'aéronef par une liaison de corps d'attache (68) comportant des éléments de liaison (70, 70') et au moins un pion de cisaillement (72) qui comprend un corps cylindrique (78) et une collerette (80) présentant un diamètre (D80) supérieur à celui du corps cylindrique (78), la liaison de corps d'attache (68) comprenant, pour chaque pion de cisaillement (72), un premier trou (82) dans la structure primaire (50) et un deuxième trou (84) dans le corps d'attache (56) configurés pour loger le pion de cisaillement (72), le premier trou (82) comportant un épaulement (90) contre lequel prend appui la collerette (80) en fonctionnement de manière à ce que le corps cylindrique (78) soit positionné à cheval dans les premier et deuxième trous (82, 84), **caractérisée en ce que** la liaison de corps d'attache (68) comprend :
- un premier système d'immobilisation qui comporte, en plus de l'épaulement (90), une butée démontable (92), solidaire de la structure primaire (50), configurée pour immobiliser la collerette (80) entre l'épaulement (90) et la butée démontable (92), et
- un deuxième système d'immobilisation qui comporte d'une part une gorge (96) positionnée dans un prolongement (98) du pion de cisaillement (72) et, d'autre part, une fourchette (100) reliée à la structure primaire (50) par au moins une liaison démontable (102) et coopérant en fonctionnement avec la gorge (96) de manière à immobiliser en translation le pion de cisaillement (72).

2. Attache-moteur d'aéronef selon la revendication 1, **caractérisée en ce que** le prolongement (98) a une forme cylindrique coaxiale au corps cylindrique (78) et **en ce que** la gorge (96) s'étend sur toute la circonférence du prolongement (98) et présente deux flancs positionnés dans deux plans perpendiculaires à l'axe du corps cylindrique (78).

3. Attache-moteur d'aéronef selon la revendication précédente, **caractérisée en ce que** la fourchette (100) comprend une plaque d'arrêt (104) qui présente deux branches (104.1, 104.2) configurées pour se loger dans la gorge (96) du prolongement (98) de part et d'autre dudit prolongement (98), les branches (104.1, 104.2) étant séparées d'une distance sensiblement égale au diamètre du fond de la gorge (96).

4. Attache-moteur d'aéronef selon la revendication précédente, **caractérisée en ce que** les branches (104.1, 104.2) sont séparées par une découpe en U (106) comportant une base (106.1) qui décrit un demi-cercle de diamètre sensiblement égal au diamètre du fond de la gorge (96).

5. Attache-moteur d'aéronef selon la revendication précédente, **caractérisée en ce que** la plaque d'arrêt (104) a une forme rectangulaire et comprend, au niveau d'un premier petit côté, la découpe en U (106) et, à proximité du deuxième petit côté, au moins un orifice traversant (108) prévu pour la liaison démontable (102).

6. Attache-moteur d'aéronef selon la revendication précédente, **caractérisée en ce que** la plaque d'arrêt (104) comprend des bords recourbés (110) au niveau des deux grands côtés de la forme rectangulaire.

7. Attache-moteur d'aéronef selon l'une des revendications précédentes, **caractérisée en ce que** le premier trou (82) comprend un tronçon principal (82.1) qui s'étend d'une première face de contact (F50) orientée vers le corps d'attache (56) jusqu'à l'épaulement (90) et un tronçon élargi (82.2) qui s'étend de l'épaulement (90) jusqu'à une face d'accès (F50') opposée à la première face de contact (F50), le tronçon élargi (82.2) ayant un diamètre supérieur au diamètre (D80) de la collerette (80) et **en ce que** le prolongement (98) du pion de cisaillement (72) a une longueur telle qu'une partie du prolongement (98) comportant la gorge (96) soit située en dehors du premier trou (82).

8. Attache-moteur d'aéronef selon l'une des revendications précédentes, **caractérisée en ce que** la liaison de corps d'attache (68) comprend au moins un système anti-rotation (112) pour au moins l'un des éléments de liaison (70, 70'), chaque système anti-rotation comportant une plaque anti-rotation (114) qui présente un orifice traversant (116) avec une section complémentaire à une section supérieure (76.2) d'une tête (76) de l'élément de liaison (70, 70') de sorte que la plaque d'arrêt (114) et la tête (76) soient immobilisées en rotation l'une par rapport à l'autre, ainsi qu'une liaison démontable (118) pour relier ladite plaque anti-rotation (114) à la structure primaire (50).

9. Attache-moteur selon la revendication précédente, **caractérisée en ce que** la liaison de corps d'attache (68) comprend au moins une plaque support (122), reliée à la structure primaire (50), à laquelle sont reliées la plaque d'arrêt (104) et la ou les plaque(s) anti-rotation (114), ladite plaque support (122) comportant, pour chaque élément de liaison (70, 70'), un orifice de passage (124) ayant une section approximativement identique à une section inférieure (76.1) circulaire de la tête (76) de l'élément de liaison (70, 70').

10. Procédé de montage d'une attache-moteur selon l'une des revendications précédentes, comprenant les étapes visant à :
- relier le corps d'attache (56) au moteur d'aéronef (52),
- déplacer verticalement le moteur d'aéronef (52) de manière à positionner des première et deuxième faces de contact (F50, F56) de la structure primaire du mât d'aéronef et du corps d'attache (56) en face l'une de l'autre,
- mettre en place les éléments de liaison (70, 70'),
- insérer chaque pion de cisaillement (72) dans les premier et deuxième trous (82, 84) jusqu'à ce que la collerette (80) soit en contact avec l'épaulement (90), **caractérisé en ce que** le procédé comprend aussi les étapes suivantes:
- mettre en place la butée démontable (92),
- mettre en place la fourchette (100) en la faisant coopérer avec la gorge (96) du prolongement (98) du pion de cisaillement,
- relier la fourchette (100) à la structure primaire (50) grâce à au moins une liaison démontable (102).

11. Aéronef comprenant une attache-moteur selon l'une des revendications 1 à 9.

## Patentansprüche

1. Flugzeugtriebwerksaufhängung, welche einen Befestigungskörper (56) umfasst, der mit einer Primärstruktur (50) eines Flugzeugpylons durch eine Befestigungskörperverbindung (68) verbunden ist, die Verbindungselemente (70, 70') und wenigstens einen Scherstift (72) aufweist, welcher einen zylindrischen Körper (78) und einen Flansch (80), der einen Durchmesser (D80) aufweist, der größer als derjenige des zylindrischen Körpers (78) ist, umfasst, wobei die Befestigungskörperverbindung (68) für jeden Scherstift (72) ein erstes Loch (82) in der Primärstruktur (50) und ein zweites Loch (84) im Befestigungskörper (56) umfasst, die dafür ausgelegt sind, den Scherstift (72) aufzunehmen, wobei das erste Loch (82) einen Absatz (90) aufweist, an welchem sich der Flansch (80) im Betrieb abstützt, so dass der zylindrische Körper (78) aufsitzend im ersten und im zweiten Loch (82, 84) positioniert ist, **dadurch gekennzeichnet, dass** die Befestigungskörperverbindung (68) umfasst:
- ein erstes Fixierungssystem, welches zusätzlich zu dem Absatz (90) einen mit der Primärstruktur (50) fest verbundenen lösbaren Anschlag (92) aufweist, der dafür ausgelegt ist, den Flansch (80) zwischen dem Absatz (90) und dem lösbaren Anschlag (92) zu fixieren, und
- ein zweites Fixierungssystem, welches einerseits eine Rille (96) aufweist, die in einer Verlängerung (98) des Scherstiftes (72) positioniert ist, und andererseits ein Gabelstück (100), das mit der Primärstruktur (50) durch wenigstens eine lösbare Verbindung (102) verbunden ist und im Betrieb mit der Rille (96) so zusammenwirkt, dass es den Scherstift (72) gegen Translation fixiert.

2. Flugzeugtriebwerksaufhängung nach Anspruch 1, **dadurch gekennzeichnet, dass** die Verlängerung (98) eine koaxiale zum zylindrischen Körper (78) zylindrische Form aufweist, und dadurch, dass sich die Rille (96) über den gesamten Umfang der Verlängerung (98) erstreckt und zwei Seitenwände aufweist, die in zwei zur Achse des zylindrischen Körpers (78) senkrechten Ebenen positioniert sind.

3. Flugzeugtriebwerksaufhängung nach dem vorhergehenden Anspruch, **dadurch gekennzeichnet, dass** das Gabelstück (100) eine Arretierplatte (104) umfasst, welche zwei Schenkel (104.1, 104.2) aufweist, die dafür ausgelegt sind, in der Rille (96) der Verlängerung (98) beiderseits der Verlängerung (98) aufgenommen zu werden, wobei die Schenkel (104.1, 104.2) durch einen Abstand getrennt sind, der im Wesentlichen gleich dem Durchmesser des Bodens der Rille (96) ist.

4. Flugzeugtriebwerksaufhängung nach dem vorhergehenden Anspruch, **dadurch gekennzeichnet, dass** die Schenkel (104.1, 104.2) durch einen U-förmigen Ausschnitt (106) getrennt sind, der eine Unterseite (106.1) aufweist, welche einen Halbkreis mit einem Durchmesser beschreibt, der im Wesentlichen gleich dem Durchmesser des Bodens der Rille (96) ist.

5. Flugzeugtriebwerksaufhängung nach dem vorhergehenden Anspruch, **dadurch gekennzeichnet, dass** die Arretierplatte (104) eine rechteckige Form aufweist und an einer ersten kurzen Seite den U-förmigen Ausschnitt (106) und in der Nähe der zweiten kurzen Seite wenigstens eine durchgehende Öffnung (108), die für die lösbare Verbindung (102) vorgesehen ist, umfasst.

6. Flugzeugtriebwerksaufhängung nach dem vorhergehenden Anspruch, **dadurch gekennzeichnet, dass** die Arretierplatte (104) gekrümmte Ränder (110) an den zwei langen Seiten der rechteckigen Form umfasst.

7. Flugzeugtriebwerksaufhängung nach einem der vorhergehenden Ansprüche, **dadurch gekennzeichnet, dass** das erste Loch (82) einen Hauptabschnitt (82.1), welcher sich von einer ersten Kontaktseite (F50), die dem Befestigungskörper (56) zugewandt ist, bis zum Absatz (90) erstreckt, und einen erweiterten Abschnitt (82.2), welcher sich vom Absatz (90) bis zu einer der ersten Kontaktseite (F50) gegenüberliegenden Zugangsseite (F50') erstreckt, umfasst, wobei der erweiterte Abschnitt (82.2) einen Durchmesser aufweist, der größer als der Durchmesser (D80) des Flansches (80) ist, und dadurch, dass die Verlängerung (98) des Scherstiftes (72) eine solche Länge aufweist, dass ein Teil der Verlängerung (98), der die Rille (96) aufweist, sich außerhalb des ersten Loches (82) befindet.

8. Flugzeugtriebwerksaufhängung nach einem der vorhergehenden Ansprüche, **dadurch gekennzeichnet, dass** die Befestigungskörperverbindung (68) wenigstens ein Verdrehsicherungssystem (112) für wenigstens eines der Verbindungselemente (70, 70') umfasst, wobei jedes Verdrehsicherungssystem eine Verdrehsicherungsplatte (114) aufweist, welche eine durchgehende Öffnung (116) mit einem Querschnitt aufweist, der zu einem oberen Querschnitt (76.2) eines Kopfes (76) des Verbindungselements (70, 70') komplementär ist, so dass die Arretierungsplatte (114) und der Kopf (76) gegen Verdrehung relativ zueinander gesichert sind, sowie eine lösbare Verbindung (118) zum Verbinden der Verdrehsicherungsplatte (114) mit der Primärstruktur (50).

9. Triebwerksaufhängung nach dem vorhergehenden Anspruch, **dadurch gekennzeichnet, dass** die Befestigungskörperverbindung (68) wenigstens eine mit der Primärstruktur (50) verbundene Trägerplatte (122) umfasst, mit welcher die Arretierplatte (104) und die Verdrehsicherungsplatte(n) (114) verbunden sind, wobei die Trägerplatte (122) für jedes Verbindungselement (70, 70') eine Durchgangsöffnung (124) mit einem Querschnitt aufweist, der mit einem kreisförmigen unteren Querschnitt (76.1) des Kopfes (76) des Verbindungselements (70, 70') annähernd identisch ist.

10. Verfahren zur Montage einer Triebwerksaufhängung nach einem der vorhergehenden Ansprüche, welches die Schritte umfasst zum:
- Verbinden des Befestigungskörpers (56) mit dem Flugzeugtriebwerk (52),
- vertikalen Verlagern des Flugzeugtriebwerks (52), um so eine erste und eine zweite Kontaktfläche (F50, F56) der Primärstruktur des Flugzeugpylons und des Befestigungskörpers (56) einander gegenüberliegend zu positionieren,
- Anbringen der Verbindungselemente (70, 70'),
- Einsetzen jedes Scherstiftes (72) in das erste und das zweite Loch (82, 84), bis sich der Flansch (80) in Kontakt mit dem Absatz (90) befindet, **dadurch gekennzeichnet, dass** das Verfahren außerdem die folgenden Schritte umfasst:
- Anbringen des lösbaren Anschlags (92),
- Anbringen des Gabelstückes (100), so dass es mit der Rille (96) der Verlängerung (98) des Scherstiftes zusammenwirkt,
- Verbinden des Gabelstückes (100) mit der Primärstruktur (50) mithilfe wenigstens einer lösbaren Verbindung (102).

11. Flugzeug, welches eine Triebwerksaufhängung nach einem der Ansprüche 1 bis 9 umfasst.

## Claims

1. Aircraft engine attachment comprising an attachment body (56) connected to a primary structure (50) of an aircraft pylon via an attachment body link (68) comprising link elements (70, 70') and at least one shear pin (72) that comprises a cylindrical body (78) and a flange (80) having a diameter (D80) greater than that of the cylindrical body (78), the attachment body link (68) comprising, for each shear pin (72), a first hole (82) in the primary structure (50) and a second hole (84) in the attachment body (56) that are configured such as to accommodate the shear pin (72), the first hole (82) comprising a shoulder (90) against which the flange (80) bears during operation in such a manner that the cylindrical body (78) is positioned to straddle the first and second holes (82, 84), **characterized in that** the attachment body link (68) comprises:
- a first immobilization system that comprises, in addition to the shoulder (90), a removable stop (92), integral with the primary structure (50), configured such as to immobilize the flange (80) between the shoulder (90) and the removable stop (92), and
- a second immobilization system that comprises, first, a groove (96) positioned in an extension (98) of the shear pin (72) and, second, a fork (100) connected to the primary structure (50) via at least one removable link (102) and interacting during operation with the groove (96) in such a manner as to immobilize the shear pin (72) in translation.

2. Aircraft engine attachment according to Claim 1, **characterized in that** the extension (98) has a cylindrical form coaxial relative to the cylindrical body (78) and **in that** the groove (96) extends over the entire circumference of the extension (98) and has two flanks positioned in two planes perpendicular to the axis of the cylindrical body (78).

3. Aircraft engine attachment according to the preceding claim, **characterized in that** the fork (100) comprises a stop plate (104) that has two branches (104.1, 104.2) that are configured such as to be accommodated in the groove (96) of the extension (98) on either side of said extension (98), the branches (104.1, 104.2) being separated by a distance substantially equal to the diameter of the bottom of the groove (96).

4. Aircraft engine attachment according to the preceding claim, **characterized in that** the branches (104.1, 104.2) are separated by a U-cutout (106) comprising a base (106.1) that describes a half-circle with a diameter substantially equal to the diameter of the bottom of the groove (96).

5. Aircraft engine attachment according to the preceding claim, **characterized in that** the stop plate (104) has a rectangular form and comprises, at a first minor side, the U-cutout (106) and, close to the second minor side, at least one through-orifice (108) provided for the removable link (102).

6. Aircraft engine attachment according to the preceding claim, **characterized in that** the stop plate (104) comprises curved edges (110) at the two major sides of the rectangular form.

7. Aircraft engine attachment according to one of the preceding claims, **characterized in that** the first hole (82) comprises a principal portion (82.1) that extends from a first contact face (F50) oriented towards the attachment body (56) as far as the shoulder (90) and an enlarged portion (82.2) that extends from the shoulder (90) as far as an access face (F50') opposite the first contact face (F50), the enlarged portion (82.2) having a diameter greater than the diameter (D80) of the flange (80) and **in that** the extension (98) of the shear pin (72) has a length such that part of the extension (98) comprising the groove (96) is located outside of the first hole (82).

8. Aircraft engine attachment according to one of the preceding claims, **characterized in that** the attachment body link (68) comprises at least one anti-rotation system (112) for at least one of the link elements (70, 70'), each anti-rotation system comprising an anti-rotation plate (114) that has a through-orifice (116) with a section that complements an upper section (76.2) of a head (76) of the link element (70, 70') such that the stop plate (114) and the head (76) are immobilized in rotation relative to one another, and also a removable link (118) for connecting said anti-rotation plate (114) to the primary structure (50).

9. Engine attachment according to the preceding claim, **characterized in that** the attachment body link (68) comprises at least one support plate (122), connected to the primary structure (50), to which are connected the stop plate (104) and the one or more anti-rotation plate(s) (114), said support plate (122) comprising, for each link element (70, 70'), a passage orifice (124) having a section approximately identical to a circular lower section (76.1) of the head (76) of the link element (70, 70').

10. Method for mounting an engine attachment according to one of the preceding claims, comprising the steps aimed at:
- connecting the attachment body (56) to the aircraft engine (52),
- vertically moving the aircraft engine (52) such as to position first and second contact faces (F50, F56) of the primary structure of the aircraft pylon and of the attachment body (56) opposite one another,
- placing the link elements (70, 70'),
- inserting each shear pin (72) into the first and second holes (82, 84) until the flange (80) is in contact with the shoulder (90), **characterized in that** the method also comprises the following steps:
- placing the removable stop (92),
- placing the fork (100) and causing it to interact with the groove (96) of the extension (98) of the shear pin,
- connecting the fork (100) to the primary structure (50) by virtue of at least one removable link (102) .

11. Aircraft comprising an engine attachment according to one of Claims 1 to 9.
